# EUROPEAN PATENT SPECIFICATION

(11) **EP 2 293 871 B1**
(45) Date of publication and mention of the grant of the patent: **22.06.2016**
(21) Application number: 09761661.9
(22) Date of filing: 04.06.2009
(51) Int. Cl.: B01J 13/02

(54) **CORE-SHELL PARTICLE AND METHOD FOR MANUFACTURING THE SAME**
KERN-HÜLLE-PARTIKEL UND HERSTELLUNGSVERFAHREN DAFÜR
PARTICULE DE TYPE NOYAU-ENVELOPPE ET SON PROCÉDÉ DE FABRICATION

(30) Priority: 10.06.2008 WO PCT/CN2008/001116
(43) Date of publication of application: 16.03.2011
(73) Proprietor: Unilever PLC, London Greater London EC4P 4BQ (GB); Unilever N.V., 3013 AL Rotterdam (NL)
(72) Inventor: CAO, Jian, Shanghai 200335 (CN); LIU, Weichang, Shanghai 201103 (CN); WANG, Xiaoli, Shanghai 200051 (CN); ZHOU, Weizheng, Shanghai 200335 (CN)
(74) Representative: Corsten, Michael Allan
(86) International application number: PCT/EP2009/056889
(87) International publication number: WO 2009/150098

(56) References cited:
- WO-A1-2009/120526
- WO-A2-2008/072239
- FR-A1- 2 855 074
- JP-A- 52 120 976
- JP-A- 54 128 483
- JP-A- 61 057 236
- US-A- 5 500 223
- US-A1- 2004 052 865
- US-A1- 2007 202 063
- US-B1- 6 616 947
- XING L; HONGYAN L; SHUJUN W; LU Z; HUA C: "Preparation and thermal properties of form-stable paraffin phase change material encapsulation" SOLAR ENERGY, PERGAMON PRESS. OXFORD, GB, vol. 80, no. 12, 1 December 2006 (2006-12-01), pages 1561-1567, XP025126790 ISSN: 0038-092X [retrieved on 2006-12-01]

## Description

### Technical Field of the Invention

The present invention relates to a core shell particle and to a method for manufacturing the same.

### Background of the Invention

WO2004/024209 describes materials and methods for use in delivering substances. It particularly discloses core-shell particle having a core encapsulated within a calcium carbonate shell, with an intermediate layer composed of an amphiphilic compound surrounding the core. The core-shell particles are produced by a method comprising forming an emulsion droplet, contacting the emulsion droplet with a calcium solution, adding Mg to the solution and adding a short chained acid polymer to the solution. Uses of the core shell particles are described wherein substances in can be absorbed into the core shell particles. Other uses are described where the core shell particles are used to deliver pharmacological agents.

FR 2 855 074 A1 discloses a process for producing a capsule comprising an oil core and a mineral shell comprising the steps of making an oil-in-water emulsion and adding a calcium salt and a phosphate salt to said emulsion while a NaOH solution is added during the formation of said mineral shell.

One major disadvantage of this manufacturing process is the required use of an amphiphilic compound and a polymer which are moreover retained in the final product.

Stabilising an emulsion by using powders (e.g. colloidal silica) which adsorb at the interface has been known since Pickering, nonetheless, this does not result in core-shell particles which can be removed from the continuous aqueous phase.

There is therefore a need for core-shell particles which can be produced without using amphiphilic compounds and which moreover do not contain said amphiphilic compounds.

### Tests and definitions

### Particle diameter

Core shell particle diameter was measured by microscopy.

### Long chain

Long chain means 16 carbon atoms or more.

### Lipids

Lipids mean long chain fatty acids or long chain alcohols

### Oils or fats

Oils and fats mean compounds containing more than 80% triglycerides. They can also contain diglycerides, monoglycerides and free fatty acids.

### Hydrocarbon oils

Hydrocarbon oils mean alkane containing at least 6 carbon atoms

### Hydrophobic compounds

Hydrophobic compounds means lipids, oils or fats, hydrocarbon oils, silicon oils or any mixture thereof, either pure or containing compounds in solution. Hydrophobic compounds can also contain particles in suspension.

### General Description of the Invention

It is a first object of the present disclosure to provide core-shell particles characterised in that they consist in a hydrophobic core and an inorganic shell.

Preferably, the inorganic shell is made of carbonate, phosphate, sulphate, silicate, metal oxides, clay or any mixture thereof. More preferably the inorganic shell is made out of carbonate, phosphate or any mixture thereof. Even more preferably the inorganic shell is made out of calcium carbonate.

The hydrophobic core contains one or more hydrophobic compounds. Hydrophobic compounds used in the present invention are preferably oils or fats. Preferably, the hydrophobic core contains at least 50% w/w hydrophobic compounds, more preferably at least 75% w/w, even more preferably at least 95% w/w.

The core-shell particles of the disclosure preferably have a diameter of between 0.2 and 500 microns, preferably above 1 micron, more preferably above 10 microns. Preferably also the particles have a diameter of less than 50 microns.

Preferably, the inorganic shell is not porous. It means that after having been washed with solvent in order to remove residual hydrophobic material on the outside of the inorganic shell, hydrophobic compounds remain inside the inorganic shell.

It is a second object of the present invention to provide a process for producing a core shell particle according to any preceding claim and comprising the steps of:
a. Introducing insoluble inorganic particles into an aqueous phase
b. Adding a hydrophobic compound and making an emulsion of the hydrophobic compound in the aqueous phase
c. Adding inorganic particles precursors to the emulsion until an inorganic shell made from inorganic particles precursors and inorganic particles of step a. is created around hydrophobic droplets, wherein a pH adjuster such as NaOH is added during the formation of the inorganic shell to avoid having the pH dropping below the precipitation pH of the inorganic particle precursors.

The addition of the precursors leads to the precipitation of further inorganic material which can be identical to, or different from, the material constituting the inorganic particles of step a. The inorganic particles of step (a.) act as nucleation points for the formation of a solid shell around the droplets.

In order to avoid a bulk precipitation of the inorganic particles precursors, the rate of addition of said inorganic particles precursors must be sufficiently slow, otherwise the precursor, instead of precipitating around the existing inorganic particles will precipitate in the solution (bulk precipitation).

Inorganic particles precursors of step c. are combinations of cations and anions which form a precipitate. Inorganic particles precursors of step c. comprise
- cations of group II metals as well as transition metal ions or any mixture thereof and,
- anions of the group consisting of carbonates, phosphates, chlorides sulfonates or sulphates ions, or any mixture thereof.

The inorganic material which precipitates in step c. can be identical to, or different from, the material which constitutes the inorganic particles of step a.

During the formation of the inorganic particles in step c, pH drops, it is thus advantageous to add a pH adjuster such a NaOH at this step to avoid having the pH dropping below the precipitation pH of the inorganic particles precursors. Otherwise, precipitation would stop prematurely.

In a preferred embodiment of the invention core shell particles are then separated from the aqueous phase.

The cores shell particles can then be washed with a solvent to remove hydrophobic compounds which can still present on the outside surface, the core shell particles are then dried to form a free flow powder.

### Detailed Description of the Invention

The invention will be further described in the following examples.

### Example 1 for making a shell with CaCO3 crystal

1. 8g precipitated CaCO3 particle (Marco calcium, Japan) is dispersed in 200g de-ionised water at a pH value of 8.5, using ammonium chloride and ammonium hydroxide to control the pH. A Silverson is used to disperse the particle at 4000 rpm for 5mins. 20ml(18g) food grade sun flower oil is then added slowly to the dispersion at 4000rpm Silverson speed. After 2 mins a stable emulsion is formed.
2. The emulsion is then transferred to a one liter reaction vessel. A over head stirred is used to agitate the emulsion at 150 rpm. CO2 is then introduced to the vessel at a 0.02 partial pressure during the whole process. CaCl2 solution is introduced using a pump. During the process NaOH solution is also introduced into the vessel to control the emulsion pH constant at 8.5. In order to control the growth rate and thickness of the CaC03 shell the concentration and flow rate of the CaCl2 solution is controlled. Typically the flow rate and concentration of CaCl2 solution are kept low at the beginning of the process. High flow and concentration are used in later stage. Concentrations and flow rates of CaCl2 solutions used in the process as a function of time were as follows:
   - For 2 hours, 16.5 ml per hour of 0.07 mol/l of CaCl2 solution
   - For further two hours, 16.5 ml per hour of 0.7 mol/l of CaCl2 solution
   - For further two hours, 16.5 ml per hour of 3.5 mol/l of CaCl2 solution
   - For further two hours, 28 ml per hour of 4.0 mol/l of CaCl2 solution
3. After the reaction the particles are separated from the liquid filtration. The particles are washed with de-ionised water and then put in 200ml ethyl acetate with gentle agitation for 2 minutes. It is then separated from the solvent and dried in a vacuum oven at room temperature for 24 hours. Free flow powder is obtained.

### Example 2:

Commercial perfumes currently used in UK Comfort Blue fabric conditioner were used to replace sun flower oil in Example 1.

### Example 3:

Mixtures of limonene and sun flower oil, from 50% to 10% of limonene used as the hydrophobic phase.

### Example 4:

Mixture Basil 20% in sun flower oil is as the hydrophobic phase.

### Example 5:

Mixture of cocktail flavor and sun flower oil (1:9 volume) is as the hydrophobic phase. Cocktail flavor contains Trans-2-hexenal, cis-3-hexenol, cis-3-hexenyl acetate, carvone, ethyl octanoate and L-limonene(the same volume in the cocktail flavor).

### Example 6:

1. 1.2g CaCO3 particle (Marco calcium, Japan) is dispersed in 30ml deionised water at a pH value of 8.5, using ammonium chloride and ammonium hydroxide to control the pH.. A Silverson is used to disperse the particles at 4000 rpm for 5mins. 3ml food grade sun flower oil is then added slowly to the dispersion at 4000rpm Silverson speed in 5 mins
2. 25ml 0.1 M CaCl2 and 25ml 0.1 M NaHCO3 solutions are added into the emulsion separately at 12.5ml/h for the first 2 hours
3. 25ml 0.2M CaCl2 and 25ml 0.2M NaHCO3 solutions are added into the emulsion separately at 12.5ml/h for the following 2 hours
4. 25ml 0.5M CaCl2 and 25ml 0.5M NaHCO3 solutions are added into the emulsion separately at 12.5ml/h for the following 2 hours
5. 25ml 1.0M CaCl2 and 25ml 1.0M NaHCO3 solutions are added into the emulsion separately at 12.5ml/h for the following 2 hours
6. Capsules separated by filtration
7. Deionised water and Ethyl acetate washing and then drying in vacuum.

Example 7: for making a shell with CaCO3 and dicalcium phosphate dihydrate crystals (not according to the invention)
1. 0.8g CaCO3 particle (Marco calcium, Japan) is dispersed in 20ml deionised water. A Silverson is used to disperse the particles at 4000 rpm for 5mins. 2.0ml food grade sun flower oil is then added slowly to the dispersion at 4000rpm Silverson speed in 5 mins.
2. 5ml 0.015M CaCl2 and 5ml 0.01 M K₂HPO₄/KH₂PO₄ (1:1 molar ratio) solutions are added into the emulsion separately drop by drop for the first 2 hours.
3. 5ml 0.15M CaCl2 and 5ml 0.1 M K₂HPO₄/KH₂PO₄ (1:1 molar ratio) solution are added into the emulsion separately drop by drop for the following 2 hours.
4. 5ml 1.5M CaCl2 and 5ml 1 M K₂HPO₄/KH₂PO₄ (1:1 molar ratio) solution are added into the emulsion separately drop by drop for the following 2 hours.
5. Capsules separated by filtration
6. Deionised water and Ethyl acetate washing and then drying in vacuum.

## Claims

1. A process for producing a core shell particle consisting of a hydrophobic core and an inorganic shell, the process comprising the steps of:
a. Introducing inorganic particles into an aqueous phase
b. Adding a hydrophobic substance and making an emulsion of the hydrophobic substance in the aqueous phase
c. Adding inorganic particles precursors to the emulsion until an inorganic shell made from inorganic particles precursors and inorganic particles of step a. is created around hydrophobic droplets, wherein a pH adjuster such as NaOH is added during the formation of the inorganic shell to avoid having the pH dropping below the precipitation pH of the inorganic particle precursors

2. A process according to claim 1 wherein the hydrophobic core of the particle contains at least 50% w/w of hydrophobic compounds.

3. A process according to claim 1 or claim 2, wherein the inorganic shell is made of carbonate, phosphate, sulphate, silicate, metal oxides, clay or any mixture thereof.

4. A process according to claim 3, wherein the inorganic shell is made out of calcium carbonate.

## Patentansprüche

1. Verfahren zur Herstellung einer Kern-Hüllen-Partikel, bestehend aus einem hydrophoben Kern und einer anorganischen Hülle, wobei das Verfahren die Schritte umfasst:
a. Einbringen anorganischer Partikel in eine wässrige Phase,
b. Zugeben einer hydrophoben Substanz und Bildung einer Emulsion der hydrophoben Substanz in der wässrigen Phase,
c. Zugabe anorganischer Partikel-Vorstufen zu der Emulsion, bis eine anorganische Hülle, gebildet von anorganischen Partikel-Vorstufen und anorganischen Partikeln des Schritts a., um die hydrophoben Tröpfchen herum geschaffen ist, wobei ein pH-Regler, wie NaOH, während der Bildung der anorganischen Hülle hinzugegeben wird, um den Abfall des pH unter den Fällungs-pH der anorganischen Partikel-Vorstufen zu verhindern.

2. Verfahren nach Anspruch 1, wobei der hydrophobe Kern der Partikel mindestens 50% Gew./Gew. hydrophobe Verbindungen enthält.

3. Verfahren nach Anspruch 1 oder 2, wobei die anorganische Hülle aus Carbonat, Phosphat, Sulfat, Silikat, Metalloxiden, Ton oder jeglichen Mischungen davon gebildet wird.

4. Verfahren nach Anspruch 3, wobei die anorganische Hülle aus Calciumcarbonat gebildet wird.

## Revendications

1. Procédé de fabrication d'une particule de type noyau-enveloppe constituée d'un noyau hydrophobe et d'une enveloppe inorganique, le procédé comprenant les étapes suivantes :
a. Introduction de particules inorganiques dans une phase aqueuse
b. Ajout d'une substance hydrophobe et préparation d'une émulsion de la substance hydrophobe dans la phase aqueuse
c. Ajout de précurseurs de particules inorganiques à l'émulsion jusqu'à création d'une enveloppe inorganique constituée des précurseurs de particules inorganiques et des particules inorganiques de l'étape a autour de gouttelettes hydrophobes, un agent d'ajustement du pH tel que du NaOH étant ajouté au cours de la formation de l'enveloppe inorganique pour éviter que le pH ne chute en dessous du pH de précipitation des précurseurs de particules inorganiques.

2. Procédé selon la revendication 1 dans lequel le noyau hydrophobe de la particule contient au moins 50 % en p/p de composés hydrophobes.

3. Procédé selon la revendication 1 ou la revendication 2, dans lequel l'enveloppe inorganique est fabriquée à partir de carbonate, de phosphate, de sulfate, de silicate, d'oxydes de métaux, d'argile ou de tout mélange de ceux-ci.

4. Procédé selon la revendication 3, dans lequel l'enveloppe inorganique est fabriquée à partir de carbonate de calcium.
